# EUROPÄISCHE PATENTSCHRIFT

(11) **EP 3 357 452 B1**
(45) Veröffentlichungstag und Bekanntmachung des Hinweises auf die Patenterteilung: **19.05.2021**
(21) Anmeldenummer: 18160988.4
(22) Anmeldetag: 06.02.2015
(51) Int. Cl.: A61C 13/15, G01J 1/42

(54) **LICHTHÄRTGERÄT**
LIGHT HARDENING DEVICE
APPAREIL LUMINEUX DE DURCISSEMENT

(43) Veröffentlichungstag der Anmeldung: 08.08.2018
(62) Teilanmeldung aus: 15154217.2
(73) Patentinhaber: Ivoclar Vivadent AG, 9494 Schaan (LI)
(72) Erfinder: TOMMASINI, Dario, 7302 Mastrils (CH); SENN, Bruno, CH-9056 Gais (LI)
(74) Vertreter: Baronetzky, Klaus

(56) Entgegenhaltungen:
- EP-A2- 0 563 953
- US-A1- 2006 240 376
- US-A1- 2010 003 633
- US-A1- 2010 140 450

## Beschreibung

Lichthärtgeräte für die Polymerisation von Dentalmaterialien sind seit langem bekannt. Während in den 90er Jahren teilweise noch mit Halogenlampen und dementsprechend einem breiten Lichtemissionsspektrum, das bis in den IR-Bereich hinein ragte, gearbeitet wurde, haben sich bereits um 2000 Lichthärtgeräte durchgesetzt, die auf LED-Chips basieren und häufig Licht mit einem Emissionsmaximum um 470 nm ausstrahlen, also im Wesentlichen blaues Licht.

Die Polymerisation erfolgt, indem ein zum Emissionsmaximum passender Fotoinitiator - beispielsweise Campherchinon - die Polymerisationsreaktionen auslöst. Dies kann stationär, also in einem ortsfesten Lichthärtgerät für die Härtung beispielsweise von Prothesenzahnträgern erfolgen, aber häufig auch über ein geeignet ausgebildetes Handgerät, mit dem beispielsweise Dentalrestaurationen an natürlichen Zähnen eines Patienten polymerisiert werden können.

Zu denken ist hier beispielsweise auch an Ausbesserungsarbeiten an Prothesen, die selbstverständlich extrakorporal durchgeführt werden können.

Derartige Handgeräte werden in weitem Umfang verwendet, und im Laufe der Jahrzehnte hat sich eine hierfür geeignete Steuervorrichtung etabliert, die die Polmerisationszeit steuert, basierend auf Vorgaben des Zahntechnikers oder Zahnarztes - entsprechend der Größe der zu polymerisierenden Dentalrestauration - aber zumindest teilweise basierend auch auf gerätespezifische Vorgaben.

Ferner sind auch verschiedene Verfahren bekannt geworden, die emittierte Strahlung zu erfassen. Hier ist beispielsweise die Lösung gemäß der DE 10 2007 052 643 A1 sowie der US 2010/003633 A1 zu nennen.

In erster Linie ist aber auch auf Geräte zu verweisen, die die Reflexion der von dem Lichthärtgerät beaufschlagten Körper erfassen. In erster Linie sind hier die für den Dentalbereich maßgebenden US 2010/140450 A1 sowie DE 10 2005 019 386 B4 zu nennen. Während die Lösung gemäß der DE 92 04 621 U1 auf die von dem Gegenstand reflektierte Lichtmenge abstellt und diese erfassen will, erfasst die Lösung gemäß der genannten DE 10 2005 019 386 B4 die Strahlung im Wellenlängenberich zwischen 800 nm und 10.000 nm und vermag daher bereits gewisse Aussagen über die erfolgte Polymerisation zu treffen.

Es hat sich jedoch gezeigt, dass die Erfassung der reflektierten Strahlung und die Zuleitung dieser zur Steuervorrichtung nicht ausreicht, um vollständig zuverlässige Polymerisationsergebnisse zu erzielen.

In diesem Zusammenhang sei ergänzend darauf hingewiesen, dass bei unzureichender Polymerisation das Problem besteht, dass freie Radikale, denen nachgesagt wird, das Entstehen von Krebs zu begünstigen, nicht vollständig eingebunden sind, dass aber andererseits basierend auf einer zu intensiven Durchhärtung einer größeren Menge des Materials eine Schrumpfung des gehärteten Materials begünstigt wird, die der Entstehung von Randspalten förderlich ist.

Daher liegt der Erfindung die Aufgabe zu Grunde, ein Lichthärtgerät gemäß dem Oberbegriff von Anspruch 1 zu schaffen, da hinsichtlich der Restaurationsergebnisse beim Polymerisieren, gerade bei handgeführten Lichthärtgeräten, verbessert ist, ohne dass besonders aufwendige Versuchsreihen oder sonstige Auswertungsmaßnahme erforderlich wären.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass mit der erfindungsgemäßen Vorrichtung überraschend und gleichsam automatisch die Lichtdosis, die tatsächlich an der Dentalrestauration ankommt, erfasst und ausgewertet wird. Die Hauptursache für fehlerhafte Polymerisationsarbeiten ist offenbar nicht die falsche Wahl der Polymersationszeit, sondern die ungünstige Handhabung des Lichthärtgeräts. Wenn beispielsweise lediglich ein Teil der Restaurationsoberfläche von dem Bestrahlungsende des Lichthärtgeräts, beispielsweise wegen einer versehentlichen Bewegung des Lichthärtgeräts, beaufschlagt wird, merkt dies der Benutzer ohne die Erfindung meist nicht, sondern erhält von dem handgeführten Lichthärtgerät das Signal "Polymerisationsende", nachdem der erforderliche Polymerisationszyklus mit einer Dauer von beispielsweise 10 Sekunden abgeschlossen ist.

Erfindungsgemäß wird nun eine Änderung des reflektierten Lichtsignals erfasst:

Typischerweise wird die Oberfläche der Dentalrestauration während der Durchhärtung verändert, insbesondere wird sie opaker.

Wenn die Änderung des erfassten Signals der Reflexionsstrahlung nun einen typischen, aus der Durchhärtung stammenden Verlauf annimmt, erkennt die Steuervorrichtung, dass die Polymerisations tatsächlich erfolgreich durchgeführt wurde. Wenn aber während der Härtung ein Störsignal erkannt wird, also eine Veränderung des typischen Verlaufs der Reflexionsstrahlung über den Polymerisationszyklus, liegt dies in erfindungsgemäßer Erkenntnis an einer Ortänderung des Lichthärtgeräts bezogen auf die Dentalrestauration. Diese kann eine translatorische Bewegung quer zur Achse des Lichtleiters bzw. des Lichthärtgeräts sein, oder bzw. auch zur Normalen der Lichtaustrittsfläche, aber auch eine Schrägstellung, also eine Winkelabweichung.

Wenn beispielsweise ein Teil der emittierten Lichtenergie seitlich neben dem Zahn mit der Dentalrestauration, also in die Mundhöhle fällt, wird diese typischerweise nicht reflektieren, so dass bei einer Ortsverlagerung in dieser Richtung die Reflextionsstrahlung deutlich reduziert wird.

Wenn andererseits die Lichtaustrittsfläche den Bereich der Dentalrestauration in Richtung eines gesunden Zahn verlässt, erfolgt typischerweise - bei Speichelbenetzung - sogar ein Anstieg der Reflexionsstrahlung, so dass das Ausgangssignal des Sensors für die Reflexionsstrahlung sogar zunimmt.

Erfindungsgemäß wesentlich ist es auch, dass die Lichtaustrittsfläche über ihre gesamte Quererstreckung eine gleichmäßige Lichtabgabe gewährleistet; in vorteilhafter Austgestaltung ist die Schwankung der Lichtabgabe quer zur Lichtaustrittsfläche relativ gering, und zwar bevorzugt so, dass die äußeren Bereiche der Lichtaustrittsfläche eine höhere Lichtabgabe als die inneren haben, sofern überhaupt Abweichungen bestehen.

Erfindungsgemäß ist es ferner wesentlich, dass bei Erkennung des Fehlerfalls, also einer Änderung des Ausgangssignals des Sensors, geeignete Maßnahmen ergriffen werden. Hierzu gehört die Abgabe eines Ortskorrektursignals an den Behandler, die Erhöhung der Lichtleistung - sofern eine entsprechende Regelreserve vorhanden ist - und/oder die Verlängerung des Polymerisationszyklus.

Bevorzugt wird in jedem Falle ein Alarmsignal hinsichtlich der Ortskorrektur abgegeben, damit der Behandler nach Beendigung des Polymerisationszyklus mit einem geeigneten dentaltechnischen Instrument überprüft, ob die Durchhärtung in befriedigender Weise vorgenommen worden ist; wenn dies aufgrund einer dennoch zu starken Ortsabweichung nicht der Fall ist, wird dem Behandler der Hinweis übermittelt, an dieser Stelle nachzuhärten.

Überraschend lässt sich mit der erfindungsgemäßen Erfassung der Änderung des Reflexionssignals in seinem zeitlichen Verlauf durch eine "Störstelle" erfassen, ob eine Ortsabweichung vorliegt, und der Polymerisationszyklus lässt sich mit der Erfindung zuverlässig und störsicher durchführen, auch wenn die in der täglichen Praxis nicht stets gewährleistete ruhige Hand des Behandlers fehlt.

In vorteilhafter Weise ist es auch möglich, die Lichtleistung in Anpassung an das gemessene Polymerisationsergebnis zu erhöhen. Dies kann beispielsweise so realisiert werden, dass die gemessene Reflexionsstrahlung konstant geregelt wird. Dies bedingt eine Zunahme der emittierten Lichtleistung während der Lichtabgabe.

Besonders günstig hierbei ist es, dass durch eine derartige Härtung offenbar eine gleichmäßigere Durchhärtung vorgenommen werden kann, denn typischerweise bremst die Verfestigung der Oberfläche der Dentalrestauration den Durchtritt der Lichtleistung in tiefere Schichten, was in vorteilhafter Ausgestaltung der Erfindung kompensiert werden kann.

Die Fehlstellung der Lichtaustrittsfläche bezogen auf die Dentalrestauration lässt sich erfindungsgemäß typischerweise erfassen und auch - mindestens teilweise - kompensieren. Dies lässt sich besonders günstig durch Auswertung des Integrals über die emittierte Lichtleistung vornehmen, denn erfindungsgemäß wird die Lichtleistung zur Berechnung einer etwaigen Ortsabweichung aufsummiert.

Es versteht sich, dass hier Ortsabweichungen nicht auf den reinen translatorischen Bereich beschränkt sind, sondern auch eine etwaige Winkelabweichung, beispielsweise um 20 °, zwischen der Restaurationsoberfläche und der Lichtaustrittsfläche einschließen sollen; bei einer derartigen Änderung empfiehlt sich typischerweise eine Verlängerung des Polymerisationszyklus, die dann die teilweise mangelhafte Lichtabgabe kompensieren kann.

In weiterer vorteilhafter Ausgestaltung ist es vorgesehen, mehr als einen Lichtsensor, beispielsweise drei Lichtsensoren um den Umfang der LED-Chips verteilt an dem Lichthärtgerät vorzusehen. Bei Verwendung eines Lichtleiters, aber auch bei direkter Montage an der Spitze des Lichthärtgeräts, also der Lichtaustrittsfläche benachbart, erfolgt dann auch eine räumlich selektive Erfassung der Reflexionsstrahlung. Wenn die Erfassung ergibt, dass beispielsweise eines der Ausgangssignale der Sensoren stark reduziert ist, während die anderen beiden in unveränderter Höhe bestehen, lässt sich hierdurch auch ein Ortskorrekturhinweis ableiten, beispielsweise in dem Sinne, dass das Lichthärtgerät mit seiner Austrittsfläche in Gegenrichtung zu der Stelle des Sensors mit dem reduzierten Signal verlagert werden soll.

Bevorzugt ist es vorgesehen, dass die Steuervorrichtung bei Erhöhung des Ausgangssignals die Lichtleistung verändert und/oder die Polymerisationszeit verkürzt.

Weitere Vorteile, Einzelheiten und Merkmale ergeben sich aus der nachstehenden Beschreibung eines Ausführungsbeispiels der Erfindung anhand der Zeichnungen.

Es zeigen:
- Fig. 1: eine schematische Kurve einer von mindestens einem Sensor erfassten und der Steuervorrichtung zugeleiteten Reflextionsstrahlung, entsprechend dem Ausgangssignal des Sensors in einer Ausführungsform eines erfindungsgemäßen Lichthärtgeräts;
- Fig. 2: die Kurve gemäß Fig. 1, wobei jedoch eine Störung zum Zeitpunkt t_{S} auftritt;
- Fig. 3: die Kurve gemäß Fig. 1, wobei eine gegenüber Fig. 2 andere Störung zum Zeitpunkt t_{S} auftritt;
- Fig. 4: eine schematische Darstellung der zur Kompensation der Oberflächenhärtung erhöhten Lichtleistung;
- Fig. 5: die Kurve der Lichtleistung gemäß Fig. 4, wobei jedoch eine Störung zum Zeitpunkt t_{S} auftritt; und
- Fig. 6: eine schmatische Darstellung der Lichtaustrittsfläche im Verhältnis zu einer Dentalrestauration an einer Okklusionsfläche.

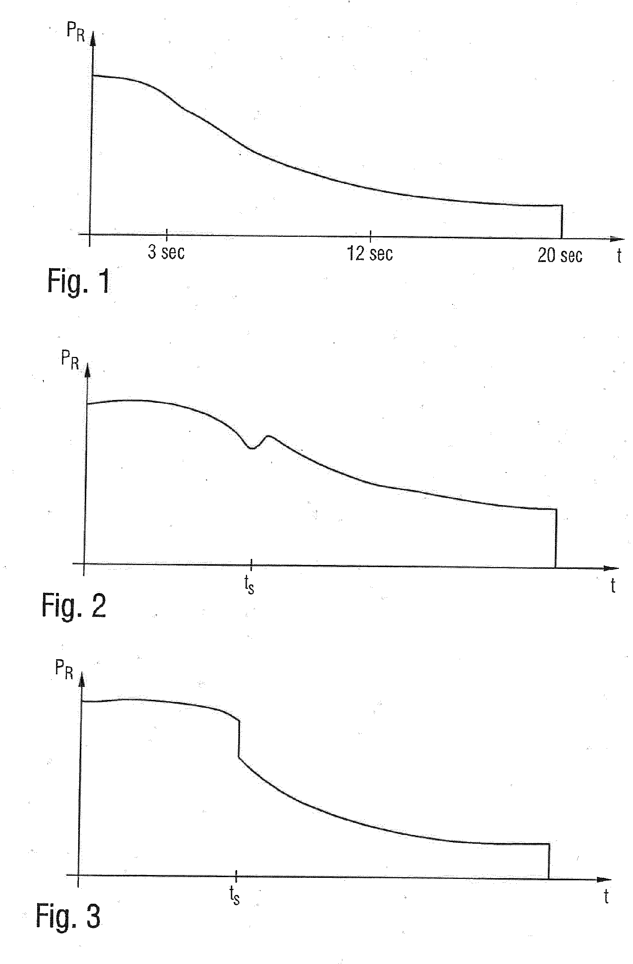

Die in Fig. 1 dargestellte reflektierte Lichtstrahlung P_{R} gibt das Ausgangssignal der Sensoren in aufsummierter Form wieder, die die von der Bestrahlungsoberfläche reflektierte Lichtstrahlung erfassen.

Das zugehörige Lichthärtgerät weist in bevorzugter Weise hierzu eine Mehrzahl von in einer Ebene nebeneinander angeordneter LED-Chips auf. Die LED-Chips sind von Reflektoren umgeben, die auch monolithisch sein können und dazu dienen, das emittierte Licht einer Lichteintrittsfläche eines Lichtleiter zuzuleiten.

Auf der Ebene der LED-Chips sind eine Mehrzahl von Sensoren angeordnet, die über eine Lichtleitoptik mit der Lichteintrittsfläche des Lichtleiters verbunden sind, wobei auch je einzelne Lichtleitfasern vorgesehen sein können.

In dieser modifizierten Ausgestaltung erstreckt sich die Sensoroptik als spezielle Lichtleitfaser durch die Lichtleiter hindurch.

Am gegenüberliegenden, distalen Ende des Lichtleiters ist eine Lichtaustrittsfläche vorgesehen, und an den Rändern der Lichtaustrittsfläche sind mehrere Sensorfleder angeordnet, bevorzugt gleichförmig um den Umfang der Lichtaustrittsfläche verteilt, die bei Lichteinfall das dort eintreffende Licht rückwärts durch den Lichtleiter hindurch leiten und den Sensoren zuleiten. Um dies zu erreichen, sind spezielle Lichtleitfasern bevorzugt, die auch dem Empfindlichkeitsspektrum der Sensoren Rechnung tragen.

In an sich bekannter Weise ist bei der vorliegenden Ausführungsform der Lichtleiter endseitig abgekröpft, beispielsweise in einem Winkel von 45 °, wobei es alternativ auch ohne Weiteres möglich ist, einen geraden Lichtleiter zu verwenden. Der Lichtleiter weist einen Durchmesser von 10 mm oder gar 12 mm auf, und da er im Wesentlichen zylindrisch ist, beträgt die Lichtaustrittsfläche 1,13 cm² - bei einem 12 mm Lichtleiter -, abzüglich der aufsummierten Sensorfläche der Sensoren.

Bei Bedarf kann eingangsseitig des Lichtleiters auch ein zusätzlicher Homogenisierkörper vorgesehen sein, der den Lichteintritt der LED-Chips in den Lichtleiter vergleichmäßigt, so dass ein Helligkeitsunterschied über die Lichtaustrittsfläche von deutlich weniger als 50 % besteht.

In dem dargestellten Ausführungsbeispiel werden die Lichtquellen mit Reserve betrieben, so dass eine Erhöhung der zugführten elektrischen - und damit abgegebenen Lichtleistung - beispielsweise über 20 Sekunden schadlos möglich ist. Die LED-Chips geben bei der Darstellung gemäß Fig. 1 zunächst eine konstante Lichtleitstung ab, beispielsweise 80 % der Nennleistung. Beim Beginn des Härtens wird in der Darstellung gemäß Fig. 1 die volle Reflexionsstrahlung abgegeben, nachdem in diesem Zustand die Dentalrestauration noch einen zähflüssigen Aggregatzustand aufweist, und dementsprechend einen hohen Reflexionsgrad.

Bei einer Gesamtdauer des Polymerisationszyklus von beispielsweise 20 Sekunden sinkt dieser Reflexionsgrad zunehmend ab etwa 3 Sekunden, da sich dann typischerweise auf den Dentalrestaurationen eine verfestigte Oberfläche bildet, deren Reflexionseigenschaften aufgrund der zunehmenden Mikrorauigkeit geringer sind. Die Mikrorauigkeit - und damit der Reflexionsgrad - der Dentalrestauration sinkt in dem dargestellten Ausführungsbeispiel bis etwa 12 Sekunden. Der Poylmerisationszyklus ist zu disem Zeitpunkt noch nicht abgeschlossen, denn gerade die tieferliegenden Schichten oder Bereiche der Dentalrestauration müssen noch durchgehärtet werden.

Die Durchhärtung ist erst zum Zeitpunkt t = 20 Sekunden abgeschlossen.

Während dieser Zeit hat der Zahnarzt - oder Zahntechniker - die Lichtaustrittsfläche über den Dentalrestaurationen dergestalt gehalten, dass die Lichtstrahlung nach Möglichkeit senkrecht dort auftrifft. Die Normale der Lichtaustrittsfläche sollte insofern möglichst parallel zur Normalen der Dentalrestaurationsoberfläche sein.

Dies ist auch der Grund, weswegen Lichtleiter bei dentalen Lichthärtgeräten, die als Handgeräte ausgebildet sind, häufig abgekröpft sind, wobei es sich versteht, dass auch größere Abkröpfwinkel als 45 ° möglich sind.

Auch eine leichte Schrägstellung der Normalen der Lichtaustrittsfläche zur Normalen der Dentalrestauration ist jedoch unkritisch; bei einem Schrägstellungswinkel von beispielsweise 20 ° ändert sich der Anteil der totalreflektierten Strahlung zur gebrochenen und in die Dentalrestauration eintretenden Strahlung nur unwesentlich. Dies gilt selbstverständlich in gleicher Weise für die Höcker und Fossae auf der Okklusionsfläche der Dentalrestauration, die ebenfalls Schrägstellungen der Normalen zur Normalen der Lichaustrittsfläche aufweisen.

Während demnach der Schrägstellungswinkel für den Erfolg der Durchhärtung der Dentalrestauration relativ unkritisch ist, bestehen die größten Probleme, wenn der Zahnarzt oder Zahntechniker während des Polymerisationsvorgangs gleichsam abrutscht oder die Lichtaustrittsfläche mindestens teilweise seitlich verlagert, wobei sich seitlich auf eine Verlagerung sowohl in palatinal/lingualer, in vestibulärer als auch in mesialer oder distaler Richtung bezieht, bei einer Dentalrestauration, die sich mindestens teilweise okklusionsseitig erstreckt.

Erfindungsgemäß ist die Lichtaustrittsfläche zunächst vergrößert, so dass sichergestellt ist, dass sie auch bei leichter Fehlausrichtung stets die Lichtempfangsfläche der Dentalrestauration vollständig abdeckt. Bei dem in Fig. 2 dargestellten Ausgangssignal der Sensoren - entsprechend der gemessenen Reflexionsstrahlung - ist es zu einer Verlagerung beispielsweise in mesialer Richtung gekommen. Dort erfasst ein Sensor eine hochglänzende Oberfläche, beispielsweise einen natürlichen Zahn oder eine Porzellankrone. Dies führt dazu, dass zum Störzeitpunkt t_{S} das aufsummierte Ausgangssignal der Sensoren zunimmt, entsprechend dem dort dargestellten Höcker.

Nachdem die Verlagerung lediglich geringfügig ist, wird der Polymerisationszyklus beibehalten, aber dennoch ein Alarmsignal abgegeben, um den Behandler darauf hinzuweisen, dass möglicherweise eine Nachbesserung oder gegebenenfalls eine Korrektur sinnvoll ist.

Bei der Situation gemäß Fig. 3 ist demgegenüber zum Störzeitpunkt t_{S} die Verlagerung in Richtung Mundhöhle erfolgt. Mindestens einer der Sensoren erfasst daher kein Signal mehr, und dementsprechend sinkt sein Ausgangssignal, was zu der dargestellten Absenkung der Reflexionslichtleistung führt, zum Zeitpunkt t_{S}.

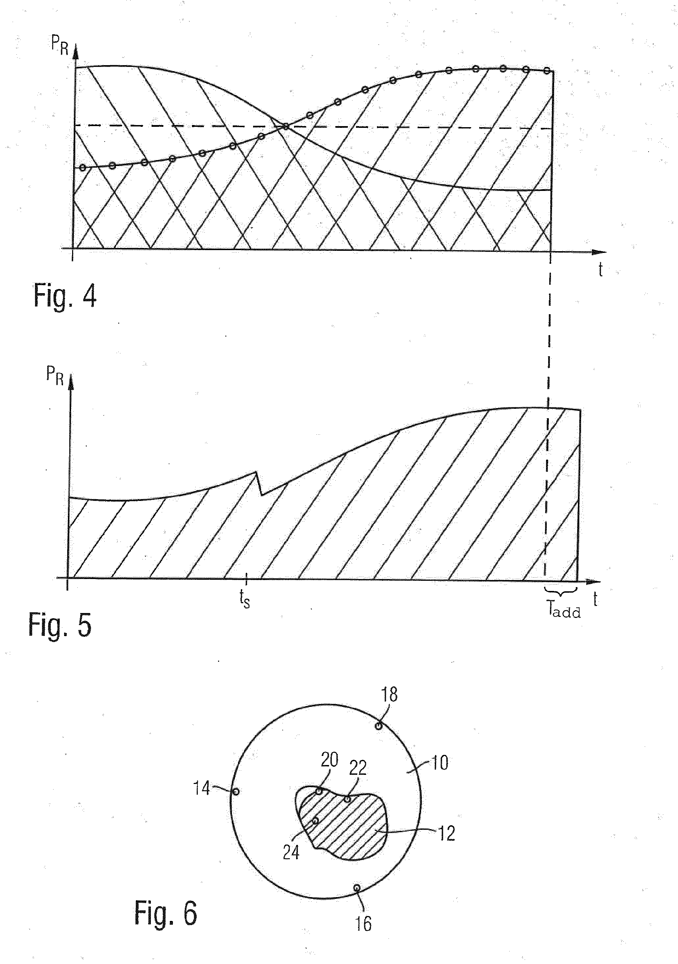

Aus Fig. 4 ist ersichtlich, in welcher Weise sich in vorteilhafter Ausgestaltung die Lichtleistung zur Kompensation der Oberflächenverfestigung erhöhen lässt. Mit durchgezogener Linie ist wiederum das Ausgangssignal des oder der Sensoren dargestellt, dass die den bereits erläuterten Verlauf hat. Um trotz der Beeinträchtigung der Durchdringung durch die Reduktion der Durchlässigkeit des Polymers aufgrund seiner Polymerisation die Abnahme der Wirksamkeit der Strahlung zu kompensieren, wird die Lichtleistung entsprechend der gepunkteten Linie symmetrisch erhöht, so dass die gemessene Reflexionsleistung insgesamt den schematisch dargestellten gestrichelten Verlauf hat.

Gemäß Fig. 5 sei nun zum Störzeitpunkt t_{S} ein störender Versatz der Lichtaustrittsfläche über der Dentalrestauration angenommen. Wie sich aus dem Vergleich von Fig. 4 und Fig. 5 ergibt, wird der Polymerisationszyklus um einen Zeitraum T_{ZUS} verlängert. Dessen Länge hängt von der Verminderung der Reflexionsleistung ab.

Es versteht sich, dass anstelle dessen auch eine Erhöhung der Lichtleistung über die Regelreserve möglich ist, wenn diese nicht durch die Maßnahme gemäß Fig. 4 bereits ausgeschöpft ist.

Aus Fig. 6 ist eine beispielhafte Anordnung der Empfindlichkeitsfelder der Sensoren an der Lichtaustrittsfläche 10 ersichtlich. Zusätzlich ist die Dentalrestauration 12 in Fig. 6 eingeblendet dargestellt, woraus sich ergibt, dass die Lichtaustrittsfläche deutlich größer, beispielsweise doppelt so groß ist wie die Fläche der Dentalrestaurationen 12 in der Vertikalprojektion.

In dem dargestellten Ausführungsbeispiel sind drei Sensoren 14, 16 und 18 am Außenumfang der Lichtaustrittsfläche 10 angeordnet, und zusätzlich drei mittennahe Sensoren 20, 22 und 24. Wie in dem dargestellten Ausführungsbeispiel ersichtlich ist, erfassen die Sensorfelder 20 bis 24 unmittelbar den Bereich der Dentalrestauration 12, während die Sensorfelder 14 bis 18 außerhalb dieser wirken. Durch die Aufsummation ist sichergestellt, dass stets mindestens teilweise auch die Dentalrestauration von einem der Sensorfelder erfasst wird.

Es versteht sich, dass auch zusätzlich eine Differenzierung zwischen verschiedenen Sensorfeldern und entsprechenden Sensoren ausgewertet werden kann, so dass die exakte Position der Dentalrestauration 12 unter der Lichtaustrittsfläche 10 im Grunde bestimmbar ist und auch Verlagerungshinweise an den Behandelnden abgegeben werden können.

Es versteht sich auch, dass die Anzahl der Sensorfelder und deren Anordnung nicht auf das hier dargestellte Beispiel beschränkt ist; viel mehr kann eine bliebige Mehrzahl von Sensoren in beliebiger Anordnung eingesetzt werden, ohne den Bereich der Erfindung zu verlassen.

## Patentansprüche

1. Handgeführtes Lichthärtgerät, mit einer Lichtquelle, die in dem handgeführten Lichthärtgerät angeordnet ist, mit mindestens einem Sensor, der für Licht im Emissionswellenlängenbereich der Lichtquelle empfindlich ist, mit einem Lichtleiter, an dessen distalen Ende eine Lichtaustrittsfläche (10) vorgesehen ist, und mit einer Steuervorrichtung für die Steuerung der Lichtquelle während der Polymerisation des Dentalmaterials, an welche Steuervorrichtung der Sensor angeschlossen ist, wobei dass die Steuervorrichtung mehr als einen Lichtsensor aufweist und während der Polymerisation des Dentalmaterials das Ausgangssignal jedes Sensors laufend oder mindestens wiederkehrend überwacht und bei Veränderung, insbesondere Reduktion des Ausgangssignals die Lichtleistung anpasst und/oder die Polymerisationszeit anpasst, und dass die Steuervorrichtung die über die Lichtaustrittsfläche (10) erfasste Reflexionsstrahlung und/oder deren Veränderung zur Berechnung einer etwaigen Ortsabweichung des Lichthärtgerätes bezogen auf eine Dentalrestauration (12), bei welcher ein Teil der über die Lichtaustrittsfläche (10) emittierten Lichtenergie seitlich neben einem Zahn mit der Dentalrestauration (12), also in eine Mundhöhle fällt, aufsummiert, und dass die Lichtquelle mindestens einen Reflektor aufweist, wobei die Sensoren außerhalb des mindestens einen Reflektors neben diesem angeordnet sind, insbesondere so nahe wie möglich an diesen gerückt.

2. Lichthärtgerät nach Anspruch 1, **dadurch gekennzeichnet, dass** die Steuervorrichtung über die reflektierte und von den Sensoren erfasste Strahlung Bewegungen des Lichthärtgeräts gegenüber einer inhomogenen Oberfläche erfasst und die Lichtleistung und/oder die Polymerisationszeit vergrößert, wenn die reflektierte Strahlung gegenüber einem Ausgangswert verändert ist.

3. Lichthärtgerät nach einem der vorhergehenden Ansprüche, **dadurch gekennzeichnet, dass** die gesamte, insbesondere kreisförmige, Lichtaustrittsfläche (10) des Lichtleiters als Empfangsfläche für die reflektierte Strahlung zur Verfügung steht und die reflektierte Strahlung den Sensoren am anderen Ende des Lichtleiters zugeleitet ist.

4. Lichthärtgerät nach einem der vorhergehenden Ansprüche, **dadurch gekennzeichnet, dass** die Ortsabweichung eine Abweichung des Orts quer zu einer Achse eines Lichtleiters des Lichthärtgeräts, oder quer zu einer Normalen der Lichtaustrittsfläche (10) betrifft.

5. Lichthärtgerät nach einem der vorhergehenden Ansprüche, **dadurch gekennzeichnet, dass** die Ortsabweichung eine Abweichung des Orts in Richtung der normalen Lichtaustrittsfläche betrifft.

6. Lichthärtgerät nach einem der vorhergehenden Ansprüche, **dadurch gekennzeichnet, dass** die Ortsabweichung eine Abweichung des Winkels der normalen Lichtaustrittsfläche zu der zu bestrahlenden Fläche ist.

7. Lichthärtgerät nach einem der vorhergehenden Ansprüche, **dadurch gekennzeichnet, dass** die Steuervorrichtung einen Schwellwertmodus aufweist, in welchem das Ausgangssignal der Sensoren bei eingeschalteter Lichtquelle ohne Reflexion, also beispielsweise in einem schwarzen Raum, erfasst und als Nullsignal definiert ist.

8. Lichthärtgerät nach einem der vorhergehenden Ansprüche, **dadurch gekennzeichnet, dass** die Steuervorrichtung mit einer Nennleistung eingeschalteten Lichtquelle und bei auf einer Dentalrestauration (12) oder eine entsprechende Oberfläche gerichteter Lichtaustrittsfläche (10) des Lichtleiters die von den Sensoren erfasste reflektierte Strahlung als Sollwert verarbeitet und die Lichtleistung und/oder die Polymeriationszeit entsprechend auf diesen Sollwert regelt.

9. Lichthärtgerät nach einem der vorgehenden Ansprüche, **dadurch gekennzeichnet, dass** das Lichthärtgerät auf LED-Chips basiert, wobei die Sensoren neben den LED-Chips angeordnet sind und insbesondere jeder Sensor von zwei LED-Chips gleich beabstandet ist und/oder jeder LED-Chip mindestens einen Reflektor aufweist.

10. Lichthärtgerät nach einem der vorhergehenden Ansprüche, **dadurch gekennzeichnet, dass** die aus der Lichtaustrittsfläche (10) des Lichtleiters austretende Strahlung im Wesentlichen homogen ist und dass wenn bei Schrägstellung der Lichtaustrittsfläche (10) zu der Reflektionsfläche des zu polymerisiserenden Objekts mindestens ein Teil der reflektierten Strahlung außerhalb der Lichtaustrittsfläche (10) an dieser vorbeigeleitet ist und von den Sensoren nicht erfasst ist, die Leistung des Lichthärtgeräts erhöht und/oder der Polymerisationszyklus verlängert wird, oder gegebenenfalls das Lichthärtgerät abschaltet.

11. Lichthärtgerät nach einem der vorhergehenden Ansprüche, **dadurch gekennzeichnet, dass** die Steuervorrichtung zu einem vorgegebenen Zeitpunkt nach Beginn des Polymerisationszyklus, insbesondere 50 Millisekunden nach dessen Beginn, den Wert des Ausgangssignals des Sensors erfasst und mit dem Sollwert vergleicht und das Lichthärtgerät abschaltet, wenn der Sollwert um ein vorgegebenes Maß über- oder unterschritten ist.

12. Lichthärtgerät nach einem der vorhergehenden Ansprüche, **dadurch gekennzeichnet, dass** das Ausgangssignal des Sensors ausschließlich während des Polymerisationszyklus von der Steuervorrichtung erfasst wird, wobei der Sensor ein Gauskurven-förmiges Empfindlichkeitsspektrum aufweist und die Gaußkurve des Empfindlichkeitsspektrums des Sensors das Emissionsmaximum der Lichtquelle abdeckt, und auch wenn LED-Chips mit unterschiedlichen Emissionsmaxima eingesetzt sind.

13. Lichthärtgerät nach einem der vorhergehenden Ansprüche, **dadurch gekennzeichnet, dass** die Steuervorrichtung bei Abweichung der durch den Sensor erfassten wirksamen Lichtleistung um weniger als ein vorgegebenes Maß den Polymerisationszyklus, gegebenenfalls nach Anpassung der Lichtleistung und/oder der Polymerisationszeit, fortsetzt.

14. Lichthärtgerät nach einem der vorhergehenden Ansprüche, **dadurch gekennzeichnet, dass** beim Start des Polymerisationszykluses und/oder in einem Kalibrierzyklus vor dem Start des Polymerisationszyklus das Ausgangssignal des mindestens einen Sensors erfasst und als Referenzwert gespeichert ist und dass die Lichtleistung und/oder die Polymerisationszeit angepasst wird, wenn sich das Ausgangssignal gegenüber dem Referenzwert ändert, insbesondere basierend auf einer Hysterese oder einem Schwellwert der Änderung.

15. Lichthärtgerät nach einem der vorhergehenden Ansprüche, **dadurch gekennzeichnet, dass** mindestens ein Sensor ein spektrales Empfindlichkeitsmaximum bei einer Lichtwellenlänge und mindestens ein weiterer Sensor ein spektrales Empfindlichkeitsmaximum bei einer weiteren Lichtwellenlänge aufweist und dass aus der Änderung der Ausgangssignale dieser beiden Sensoren ein von der Steuervorrichtung ein Farbumschlag des zu beaufschlagenden Dentalmaterials erfasst wird.

## Claims

1. A hand-guided light hardening device, comprising a light source which is arranged in the hand-guided light hardening device, having at least one sensor which is sensitive to light in the emission wavelength range of the light source, having a light guide, at the distal end of which a light emission surface (10) is provided and having a control device for controlling the light source during polymerization of the dental material, to which control device the sensor is connected, wherein the control device has more than one light sensor and continuously or at least recurrently monitors the output signal of each sensor during the polymerization of the dental material and, in the event of a change, in particular reduction of the output signal, adjusts the light power and/or adjusts the polymerization time, and in that the control device uses the reflection radiation detected via the light exit surface (10) and/or the change thereof for calculating any positional deviation of the light hardening unit in relation to a dental restoration (12), in which a part of the light energy emitted via the light-emitting surface (10) is summed up laterally next to a tooth comprising the dental restoration (12), i.e. falling into an oral cavity, and in that the light source has at least one reflector, the sensors being arranged outside the at least one reflector next thereto, in particular being shifted thereto maximally close.

2. The light hardening device according to claim 1, **characterized in that** the control device detects movements of the light hardening device in relation to an inhomogeneous surface via the reflected radiation detected by the sensors and increases light power and/or polymerization time when the reflected radiation is changed in relation to an initial value.

3. The light hardening device according to one of the preceding claims, **characterized in that** the entire, especially circular, light exit surface (10) of the light guide is available as a receiving surface for the reflected radiation and the reflected radiation is fed to the sensors at the other end of the light guide.

4. The light hardening device according to one of the preceding claims, **characterized in that** the location deviation relates to a deviation of the location transverse to an axis of a light guide of the light hardening device, or transverse to a normal of the light emitting surface (10).

5. The light hardening device according to one of the preceding claims, **characterized in that** the location deviation concerns a deviation of the location in the direction of the normal light emitting surface.

6. The light hardening device according to one of the preceding claims, **characterized in that** the location deviation is a deviation of the angle of the normal light-emitting surface with respect to the surface to be irradiated.

7. The light hardening device according to one of the preceding claims, **characterized in that** the control device has a threshold mode in which the output signal of the sensors is detected when the light source is switched on without reflection, that is, for example, in a black room, and is defined as a zero signal.

8. The light hardening unit according to one of the preceding claims, **characterized in that** the control device processes the reflected radiation detected by the sensors as a setpoint value with the light source switched on at a nominal power and with the light exit surface (10) of the light guide directed onto a dental restoration (12) or a corresponding surface and accordingly regulates the light power and/or the polymerization time to this setpoint value.

9. The light hardening device according to one of the preceding claims, **characterized in that** the light hardening device is based on LED chips, wherein the sensors are arranged adjacent to the LED chips and especially each sensor is equally spaced apart from two LED chips, and/or each LED chip has at least one reflector.

10. The light hardening device according to one of the preceding claims, **characterized in that** the radiation emerging from the light-emitting surface (10) of the light guide is essentially homogeneous and **in that**, if the light-emitting surface (10) is inclined with respect to the reflection surface of the object to be polymerized, at least part of the reflected radiation outside the light-emitting surface (10) is guided past the latter and is not detected by the sensors, the power of the light hardening device is increased and/or the polymerization cycle is prolonged, or, if appropriate, the light hardening device is switched off.

11. The light hardening device according to one of the preceding claims, **characterized in that** the control device detects the value of the output signal of the sensor at a predetermined time after the start of the polymerization cycle, especially 50 milliseconds after the start thereof, and compares it with the setpoint value, and switches off the light hardening device if the setpoint value is exceeded by or falls below a predetermined amount.

12. The light hardening device according to one of the preceding claims, **characterized in that** the output signal of the sensor is detected by the control device exclusively during the polymerization cycle, wherein the sensor has a Gaussian curve-shaped sensitivity spectrum and the Gaussian curve of the sensitivity spectrum of the sensor covers the emission maximum of the light source, and also when LED chips having different emission maxima are used.

13. The light hardening device according to one of the preceding claims, **characterized in that** the control device, in the event of deviating the effective light power detected by the sensor by less than a predetermined amount, terminates the polymerization cycle, optionally after adjusting the light power and/or the polymerization time.

14. The light hardening device according to one of the preceding claims, **characterized in that** at the start of the polymerization cycle and/or during a calibration cycle prior to starting the polymerization cycle, the output signal of the at least one sensor is detected and stored as a reference value, and **in that** the light power and/or the polymerization time is adjusted if the output signal changes with respect to the reference value, especially based on a hysteresis or a threshold value of the change.

15. The light hardening device according to one of the preceding claims, **characterized in that** at least one sensor has a spectral sensitivity maximum at one light wavelength and at least another sensor has a spectral sensitivity maximum at another light wavelength, and **in that**, from the change in the output signals of these two sensors, a color change of the dental material to be applied is detected by the control device.

## Revendications

1. Dispositif de photopolymérisation à commande manuelle, avec une source lumineuse disposée dans le dispositif de photopolymérisation à commande manuelle, avec au moins un capteur qui est sensible à la lumière dans la plage de longueurs d'onde d'émission de la source lumineuse, avec un guide de lumière à l'extrémité distale duquel est prévue une surface d'émission de lumière (10) et avec un dispositif de commande pour commander la source lumineuse pendant la polymérisation du matériau dentaire, le capteur étant relié au dispositif de commande, où le dispositif de commande comprend plus d'un capteur de lumière et surveille en continu ou au moins de manière récurrente le signal de sortie de chaque capteur pendant la polymérisation du matériau dentaire et ajuste la rendement lumineux en cas de modification, en particulier de diminution, du signal de sortie, et/ou ajuste le temps de polymérisation, et le dispositif de commande utilise le rayonnement de réflexion détecté via la surface d'émission de la lumière (10) et/ou la modification de celui-ci pour calculer un éventuel écart de position du dispositif de photopolymérisation par rapport à une restauration dentaire (12), dans laquelle une partie de l'énergie lumineuse émise par la surface d'émission de lumière (10) est accumulée latéralement à côté d'une dent avec la restauration dentaire (12), c'est-à-dire tombe dans une cavité buccale, et dans laquelle la source lumineuse présente au moins un réflecteur, où les capteurs sont disposés à l'extérieur dudit au moins un réflecteur à côté de celui-ci, en particulier aussi près que possible de celui-ci.

2. Dispositif de photopolymérisation selon la revendication 1, **caractérisé en ce que** le dispositif de commande détecte les mouvements du dispositif de photopolymérisation par rapport à une surface inhomogène via le rayonnement réfléchi détecté par les capteurs et augmente la puissance lumineuse et/ou le temps de polymérisation lorsque le rayonnement réfléchi est modifié par rapport à une valeur initiale.

3. Dispositif de photopolymérisation selon l'une des revendications précédentes, **caractérisé en ce que** la totalité de la surface d'émission de lumière (10), en particulier circulaire, du guide de lumière est disponible comme surface de réception pour le rayonnement réfléchi et le rayonnement réfléchi est amené aux capteurs à l'autre extrémité du guide de lumière.

4. Dispositif de photopolymérisation selon l'une des revendications précédentes, **caractérisé en ce que** l'écart de position concerne une déviation de l'emplacement transversalement à un axe d'un guide de lumière de l'appareil de photopolymérisation, ou transversalement à une normale de la surface d'émission de lumière (10).

5. Dispositif de photopolymérisation selon l'une des revendications précédentes, **caractérisé en ce que** l'écart de position concerne un écart de position dans la direction de la surface normale d'émission de lumière.

6. Dispositif de photopolymérisation selon l'une des revendications précédentes, **caractérisé en ce que** l'écart de position est un écart de l'angle de la surface normale d'émission de lumière par rapport à la surface à irradier.

7. Dispositif de photopolymérisation selon l'une des revendications précédentes, **caractérisé en ce que** le dispositif de commande présente un mode valeur seuil dans lequel le signal de sortie des capteurs est détecté lorsque la source lumineuse est allumée sans réflexion, c'est-à-dire par exemple dans une pièce noire, et est défini comme un signal nul.

8. Dispositif de photopolymérisation selon l'une des revendications précédentes, **caractérisé en ce que** le dispositif de commande traite le rayonnement réfléchi détecté par les capteurs comme une valeur de consigne lorsqu'une source lumineuse est allumée à une puissance nominale et que la surface d'émission de la lumière (10) du guide de lumière est dirigée sur une restauration dentaire (12) ou une surface correspondante, et règle la puissance lumineuse et/ou le temps de polymérisation en fonction de cette valeur de consigne.

9. Dispositif de photopolymérisation selon l'une des revendications précédentes, **caractérisé en ce que** le dispositif de photopolymérisation est à base de puces LED, où les capteurs sont disposés à proximité des puces LED et notamment chaque capteur est à égale distance de deux puces LED et/ou chaque puce LED comprend au moins un réflecteur.

10. Dispositif de photopolymérisation selon l'une des revendications précédentes, **caractérisé en ce que** le rayonnement sortant de la surface d'émission de lumière (10) du guide de lumière est sensiblement homogène et **en ce que**, lorsque la surface d'émission de lumière (10) est inclinée par rapport à la surface de réflexion de l'objet à polymériser, au moins une partie du rayonnement réfléchi à l'extérieur de la surface d'émission de lumière (10) passe devant celle-ci et n'est pas détectée par les capteurs, la puissance du dispositif de photopolymérisation est augmentée et/ou le cycle de polymérisation est prolongé ou, le cas échéant, le dispositif de photopolymérisation s'arrête.

11. Dispositif de photopolymérisation selon l'une des revendications précédentes, **caractérisé en ce que** le dispositif de commande détecte la valeur du signal de sortie du capteur à un moment prédéterminé après le début du cycle de polymérisation, en particulier 50 millisecondes après son début, et la compare avec la valeur de consigne, et arrête l'appareil de photopolymérisation si la valeur de consigne est dépassée ou sous-dépassée d'une quantité prédéterminée.

12. Dispositif de photopolymérisation selon l'une des revendications précédentes, **caractérisé en ce que** le signal de sortie du capteur est détecté par le dispositif de commande exclusivement pendant le cycle de polymérisation, où le capteur présente un spectre de sensibilité en forme de courbe gaussienne et la courbe gaussienne du spectre de sensibilité du capteur couvre le maximum d'émission de la source lumineuse, et également lorsque des puces LED ayant des maxima d'émission différents sont utilisées.

13. Dispositif de photopolymérisation selon l'une des revendications précédentes, **caractérisé en ce que**, lorsque la puissance lumineuse effective détectée par le capteur dévie de moins d'une quantité prédéterminée, le dispositif de commande poursuit le cycle de polymérisation, éventuellement après avoir ajusté la puissance lumineuse et/ou le temps de polymérisation.

14. Dispositif de photopolymérisation selon l'une des revendications précédentes, **caractérisé en ce que**, au début du cycle de polymérisation et/ou dans un cycle d'étalonnage avant le début du cycle de polymérisation, le signal de sortie dudit au moins un capteur est détecté et mémorisé comme valeur de référence, et **en ce que** la puissance lumineuse et/ou le temps de polymérisation est ajusté si le signal de sortie change par rapport à la valeur de référence, en particulier sur la base d'une hystérésis ou d'une valeur seuil du changement.

15. Dispositif de photopolymérisation selon l'une des revendications précédentes, **caractérisé en ce qu'**au moins un capteur présente un maximum de sensibilité spectrale à une longueur d'onde lumineuse et au moins un autre capteur présente un maximum de sensibilité spectrale à une autre longueur d'onde lumineuse, et **en ce qu'**à partir de la modification des signaux de sortie de ces deux capteurs, une modification de la couleur du matériau dentaire à appliquer est détectée par le dispositif de commande.
